(19) Europäisches Patentamt
European Patent Office
Office européen des brevets

(11) Publication number: **0 026 750**
**B2**

(12) # NEW EUROPEAN PATENT SPECIFICATION

(45) Date of publication of the new patent specification: **08.02.89**

(51) Int. Cl.[4]: **C 04 B 35/10,** C 04 B 35/58

(21) Application number: **80850118.3**

(22) Date of filing: **08.08.80**

(54) **Cutling insert of a ceramic alloy.**

(30) Priority: **03.09.79 SE 7907304**

(43) Date of publication of application:
**08.04.81 Bulletin 81/14**

(45) Publication of the grant of the patent:
**20.07.83 Bulletin 83/29**

(45) Mention of the opposition decision:
**08.02.89 Bulletin 89/06**

(84) Designated Contracting States:
**DE FR GB IT**

(56) References cited:
**DE-A-2 630 687**
**DE-B-2 733 063**
**GB-A- 982 494**

**CERAMIC ABSTRACTS, Vol. 57, No. 7/8, 1978 F. EGOROV et al. "Effect of Nitrogen on the Sintering of ZrN-Al2O3 Mixtures" page 178, column 1**

**The file contains technical information submitted after the application was filed and not included in this specification**

(73) Proprietor: **SANDVIK AKTIEBOLAG**
**S-811 81 Sandviken 1 (SE)**

(72) Inventor: **Brandt, Gunnar**
**Skogsvägen 3**
**S-171 65 Solna (SE)**
Inventor: **Björkman, Carl Peter**
**Bondegatan 50**
**S-116 33 Stockholm (SE)**
Inventor: **Ekemar, Carl Sven Gustav**
**Sjöfararvägen 8**
**S-132 00 Saltsjö-Boo (SE)**

(74) Representative: **Östlund, Alf Olof Anders et al**
**Sandvik AB Central Service Patents and Licences**
**S-811 81 Sandviken (SE)**

(56) References cited:
**JOURNAL OF THE AMERICAN CERAMIC SOCIETY, Vol. 61, No. 7/8, 1978 J.W. McCAULEY "A Simple Model for Aluminium Oxynitride Spinels" pages 372, 373**

**Egorov and Lugovskaya, Poroshkovaya Metallurgiya, nr. 10 (178), pp. 11-14**

**Egorov and Kislyi, Poroshkovaya Metallurgiya, nr. 6 (186), pp. 43-47**

**EP 0 026 750 B2**

Courier Press, Leamington Spa, England.

## Description

The present invention relates to a ceramic alloy with excellent properties when used as inserts for cutting. More definitely the invention is related to the type of cutting material which is based essentially on ceramic oxide, that is principally aluminium oxide, and for which the toughness and the thermal shock resistance have been increased by additions of nitrides or carbonitrides from the groups IV B, V B and VI B of the periodic system.

Ceramic materials based on aluminium oxide have been available for a very long time. The mechanical properties of this class of materials have constantly been improved because of a better understanding of the influence of the microstructure and by improved process technique.

The field of application of the ceramic materials was essentially enlarged when it was found that alloying additives could increase the toughness and the thermal shock resistance of these materials. This effect was principally obtained by addition of titanium carbide in concentrations of 25—40 w/o. The latter class of materials has involved that ceramic matrials also have been used in milling of steel and cat iron.

However, a serious disadvantage of the latter type of material is that it generally must be sintered under pressure to obtain optimal properties because of its sintering inertia. Consequently this material can be expensive to produce and furthermore the geometry of the produced inserts must be limited to very simple forms.

In spite of their good properties, among others an excellent chemical stability, nitrides have up to now not been very much used as alloying additives to ceramic materials. The reason is among other things difficulties to obtain a material without porosity for nitride additions of the same magnitude as the carbide addition used in commercial mixed ceramic materials. It is well known that even a very small amount of pores has a very negative influence on the cutting properties of ceramic materials.

Lately an increased interest in materials of oxide-nitride type has been noticed. Thus alloys based on nitrides and aluminium-oxide have been investigated by among others Rudy (cf. the Swedish patent application No. 7607895—5 or the corresponding DE—A—2,630,687). The investigated alloys comprised among others:

$Al_2O_3$-TiN,
$Al_2O_3$-MgO-TiN,
$Al_2O_3$-Ti(C,N),
$Al_2O_3$-Ti(N,O),
$Al_2O_3$-MgO(Ti,Mo)(C,N),
$Al_2O_3$-(Ti,Nb)N,
$Al_2O_3$-(Ti,V)N,
$Al_2O_3$-MgO(Ti,Mo,Cr)(C,N),
$Al_2O_3$-(Zr,Ti)(N,O),
$Al_2O_3$-(Ti,Nb)(N,O),
$Al_2O_3$-MgO-Hf(C,N),
$Al_2O_3$-Ni-Mo-(Ti,Mo)(C,N),
$Al_2O_3$-ZrN,
$Al_2O_3$-MgO-(Ti,Cr)(C,N),
$Al_2O_3$-(Ti,Cr)(C,N)

of different sintering procedures. The best technological properties were obtained for the pressure sintered materials. In turning in steel, where the criterion was the life to breakage, a shorter life was obtained for all variants except TiN-$Al_2O_3$ and

$Al_2O_3$-MgO(Ti,Mo)(C,N)

compares to a commercial material of TiC-$Al_2O_3$-type. However, TiN-$Al_2O_3$ was ground to a different geometry so a direct comparison cannot be done. The alloy

$Al_2O_3$-MgO(Ti,Mo)(C,N)

was comparable with the commercial material.

Among further publications relating to nitride aluminiumoxide alloys the Japanese publication (Kokai) No. 50—89410 (publ. 1975—07—17) can be mentioned. Among other thngs a pressure sintered alloy consisting of 75 vol-% $Al_2O_3$ and 25 vol-% TiN has been compared with a commercial pressure sintered material consisting of 75 vol-% $Al_2O_3$ and 25 vol-% TiC. In turning of steel (cutting speed 800 m/min) less crater wear and flank wear were obtained and in milling (cutting speed 600 m/min) better crater wear resistance of the $Al_2O_3$-TiN-alloy was obtained compared with the commercial material.

Also the Japanese publication (Kokai) No. 51—5216 (published 1976—01—16) is related to alloys consisting of aluminium oxide and nitride, carbonitride or carbide. Among other alloys pressure sintered alloys with 70 w/o $Al_2O_3$ and 30 w/o of a solid solution of TiN/TiC with (mole-%): 100/0, 70/30, 50/50, 30/70, 10/90, 0/100 were investigated. In turning (cutting speed 500 m/min) an increasing crater wear resistance was obtained with increasing TiN-concentration, while the flank wear was very much increased when the TiN-concentration exceeded 50 mole-% in Ti(C,N) so that the flank wear resistance of the last mentioned alloys was lower than the one of TiC-$Al_2O_3$.

In milling (cutting speed 500 m/min) better results were obtained for $Al_2O_3$-Ti(C,N), with TiN-concentrations up to 50 mole-% in Ti(C,N), compared with TiC-$Al_2O_3$. For higher TiN-concentrations a considerable abrasive wear was obtained.

Also the Japanese publication (Kokai) No. 51—6109 (publ. 1976—01—19) concerns sintered alloys of the type aluminium oxide-titanium carbide-titanium nitride and among other alloys pressure sintered

$Al_2O_3$-TiC-TiN-alloys

with 0.8 vol-% Ni have been investigated. The TiC/

TiN-ratio was kept constant 50/50-mole-% and the fraction TiC/TiN was 0.5, 10, 20, 40, 60, 80, 90 and 100 vol-% respectively. In turning of steel the best results , that is the lowest value of flank wear and damages because of breakages, were obtained for TiC/TiN-concentrations between 5 and 80 vol-%.

Furthermore pressure sintered alloys with 55 vol-% $Al_2O_3$-, 5 vol-% Ni and 40 vol-% TiC-TiN where the TiN-fraction was 0.5, 10, 30, 50, 70, 80, 90, 95 and 100 mole-% were investigated. Turning tests in steel gave good results, that is low values of flank wear and damages caused by brakages, for TiN-concentrations between 5 and 95 mole-% in TiC/TiN.

Solely TiC gave a high abrasive wear, while solely TiN gave a high frequency of breakages.

Inserts were formed of another serial of pressure sintered alloys with 60 vol-% $Al_2O_3$ and 40 vol-% TiC/TiN (50/50 vol-%), to which were added 0, 1, 5, 10, 15, 20 and 25 vol-% Ni. These inserts were tested in turning. For 0% Ni a relatively high value of the frequency of breakages was obtained and for Ni-concentrations exceeding 15 vol-% the abrasive wear increased strongly.

The Japanese publication (Kokai) 52—37913 (published 1977—03—24) could also be mentioned. This publication involves sintered alloys of the type aluminium oxide-titanium nitride-magnesium oxide. Among the other alloys pressure sintered alloys with 74.5 w/o $Al_2O_3$, 0.5 w-% MgO and 25 w-% Ti (C,N), with varying nitrogen concentration of the Ti (C,N)-phase were investigated. In turning tests a strongly increased flank wear was obtained when carbon substituted nitrogen in an amount such as the nitrogen concentration of the Ti(C,N)-phase was below 19.0 w-%. Furthermore pressure sintered alloys with 69.5 w/o $Al_2O_3$, 0.5 w/o MgO and 30 w/o Ti (N,O) with varying oxygen concentration of the TiN-phase were investigated. In turning tests a strong decrease of life (criterion:flank wear 0.3 mm) was obtained if the N-concentration of the TiN-phase was below 19 w/o. A pressure sintered alloy with 74.5 w/o $Al_2O_3$, 0.5 w/o MgO and 25 w/o TiN (N > 19.0 w/o) was tested in turning (v = 300 m/min) and compared with a commercial pressure sintered mixed ceramic alloy with 70 w/o $Al_2O_3$ and 30 w/o TiC. The commercial material obtained a considerably greater flank wear. A pressure sintered alloy with 69.2 w/o $Al_2O_3$, 0.3 w/o MgO, 0.5 w/o NiO and 30 w/o TiN (N > 19.0 w/o) showed a better flank wear resistance in turning tests, and in milling a longer milled length before breakage compared with a commercial material with 70 w/o $Al_2O_3$ and 30 w/o TiC.

Finally, the publication "Reactions of zirconium nitride with alumina and molybdenum" (Egorof, Kislyi), Poroshkovaya Metallurgiya, No. 6 (186), pp. 43—47, June 1978, discloses a ceramic alloy containing ZrN, $ZrO_2$, $ZrO_xN_y$, $Al_2O_3$ and a new phase, which is said to probably be aluminium oxynitride (AlON) or zeta-$Al_2O_3$ — a cubic modification, which is known to form in the $Al_2O_3$-AlN system in the presence of nitrogen.

The known alloys has a grain size in the range of 10 μm and is annealed after sintering.

As a summary it can be noticed that alloys based on aluminium oxide and nitrides or carbonitrides of principally titanium, are well documented in the literature. An corresponding commercial materials or alloys accessible to tests and investigations have up to now not appeared. Thus, the production of the different suggested alloys must have involved great difficulties. Furthermore the necessity of pressure sintering to obtain optimal properties may have turned out uneconomically.

The alloy according to the invention has a composition, that essentially is known by the mentioned publications. However, by special steps the alloy has got a special structure which has appeared involving surprising and favourable properties and at the same time uneconomical production steps as for example pressure sintering could be avoided. The invented cutting which normally is produced by powder metallurgical techniques comprises essentially aluminium oxide and nitrides and/or carbonitrides of one or more metals of the groups IV B, V B and VI B of the periodic system and also one or more sintering promoting oxides, if necessary. The nitrides or carbonitrides can contain small amounts of oxygen. The aluminium oxide is 40—95 w/o of the alloy composition while the nitrides and/or carbonitrides are 5—60 w/o and the sintering promoting oxides 0—2 w/o of the composition.

It is suitable to use relative mole fractions in describing the composition of the nitride or carbonitride. The total composition of the nitride based hard material component is given by the expression $(M_aM'_bM''_c)(C_xN_yO_z)_v$.
where

$$a + b + c = 1, b + c \leq 0.20$$

$$x + y + z = 1$$

stoichiometry parameter v: $0.85 \leq v \leq 1.05$

$$z \leq 0.15$$

$$x \leq 0.5$$

In the expression above, M relates to the metals Ti, Zr and Hf. M' relates to V, Nb and Ta and M'' relates to Cr, Mo, and W. The concentrations of the metals V, Nb, Ta, Cr, Mo should be relatively low. Principally the relationship $b + c \leq 0.10$ is valid in the expression above.

Commercial primary nitride products often contain small concentrations of oxygen as an impurity. However, if greater amounts than 15 atom-% of N or C are substituted, an unfavourable influence on the technological properties is obtained. The upper limit of the oxygen concentration of the nitride is consequently $z \leq 0.15$.

The excellent technological properties of materials according to the invention have been

obtained for concentrations where up to half the N-content can be substituted by C. The carbon concentration, given by x in the expression above, of the nitride can therefore vary between $0 \leq x \leq 0.5$.

The expression given above relates to the total composition of the non-oxidic hard material component of the alloy according to the invention. The good bonding properties which have been possible to obtain according to the invention (see below) have appeared independent of whether the carbonitride is added as a premanufactured homogenized carbonitride or whether carbides and nitrides are added separate in concentrations within the total composition range of the non-oxidic hard material component. At the actual sintering temperatures, an equalization of the composition occurs in the latter case because of dissolution of the carbides or nitrides partly or completely during sintering.

The alloy according to the invention is characterized in the prsence of a nitrogen-stabilized aluminium oxide with cubic structure. This nitrogen containing oxide, amounts to 2—95 vol-% of the total fraction of aluminium oxide and the rest is $\alpha$-$Al_2O_3$ (corundum) with the normal hexagonal structure.

According to the invention, it is possible to obtain pore free alloys with up to 60 w/o nitride with excellent bonding properties between the oxide and the nitride with good technological properties as a consequence. The alloy can preferably be manufactured by pressureless sintering, which makes the manufacture of inserts of complex geometry possible without extensive grinding operations. The excellent bonding properties of the material according to the invention are obtained by alloying the oxide matrix with nitrogen. The nitrogen containing aluminium oxide or Al—O—N-compound which is formed has appeared suitable as an intermediate phase between the cubic nitride and the hexagonal aluminium oxide. The Al—O—N-compound is formed at a high temperature and increased volume, which contributes to an effective closure of pores

$$(\alpha\text{-}Al_2O_3 = 3.99 \text{ g/cm}^3)$$
$$(Al\text{—}O\text{—}N = 3.68\text{—}3.69 \text{ g/cm}^3)$$

It is true that it is earlier known that nitrogen can stabilize cubic or nearly cubic structures (c/a slightly less than 1) of spinel type but the mechanical properties of these spinel structures are not known. However, it has been reported that nitrogen stabilized cubic zirconium oxide has a considerably better fracture toughness ($K_{IC}$) than the non stabilized tetragonal oxide.

The nitrogen stabilization of the oxide matrix of the alloy according to the invention can be obtained by addition of a nitride which is non stable during the sintering e.g. AlN or $Mg_3N_2$. However, it is not possible to get a nitrogen stabilization with solely TiN as an additive, because TiN is too stable to be a source of atomic nitrogen. Neither it is possible to get a nitrogen stabilization by sintering in nitrogen gas, because the reaction between $Al_2O_3$ and $N_2$ is not thermodynamically possible. However, if a reducing agent (for example C) is present at the same time, nitrogen stabilization of the oxide matrix can be obtained in sintering in $N_2$-gas or other nitrogen containing gases according to the reaction

$$Al_2O_3 + C + N_2 \longrightarrow \text{"AlON"} + CO$$

The alloy according to the invention can therefore be obtained by sintering the composition in $N_2$ in the presence of free carbon or other reducing agents. However, the embodiment first mentioned (with addition of unstable nitrides) is preferable, while the fraction of nitrogen stabilized cubic aluminium oxide is easier to control according to that process.

The material according to the invention can also be produced by the addition of "AlON" as a powder before grinding. "AlON" powder can be produced by annealing $Al_2O_3$ or $Al(OH)_3$ in $NH_3$.

The nitrogen addition must not be so large that free AlN would appear in the microstructure. Such a precipitation involves a deterioration of the mechanical and technological properties. An obvious effect which is obtained in nitrogen stabilization of the oxide matrix, is the smaller grain size compared with a non-stabilized material. This fact is one of the reasons for the improved technological properties. The stability to grain growth during sintering is increased by the increased number of phase boundary surfaces.

As earlier mentioned, one or more additional oxides can be included in compositions according to the invention (in concentrations up to 2 w/o of the mixture) to facilitate the sintering. However, most of the compositions within the composition range of the invention can with advantage be manufactured without any addition of such sintering promoting oxides. In cases, where addition of such oxides should be done, magnesium oxide or other oxides of metals of group II A of the periodic system are used with advantage. Other oxides, which can be added, are one or more oxides of metals of group III B, such as yttrium oxide, group IV B such as oxide of titanium, zirconium and/or hafnium, group V B such as oxide of vanadium, niobium and/or tantalum, group VI B such as oxide of chromium, molybdenum and/or tungsten, group VII B such as manganese oxide, group VIII such as oxide of iron, cobalt and/or nickel or oxide or rare earth metals (neodymium oxide). In most cases the addition of sintering promoting oxide is 0—1.5 w/o of the composition.

The preferred embodiment of materials according to the invention is materials where the nitride or the carbonitride comprises TiN or Ti(C,N). The desired fraction of nitrogen containing aluminium oxide with cubic or nearly cubic structure comprises 2 to 70 vol-% of the total fraction of aluminium oxide of the material.

Most of the compositions within the composition range of the invention can preferably be produced by pressureless sintering. However, for high concentrations of the metals zirconium and hafnium the pressure sintering method is preferred because a lower sintering temperature is required to obtain a pore free material in these cases.

An embodiment which also can be used with advantage, is to perform the last sequence of the sintering at a high pressure. In this case one gets the advantage of performing the sintering at a lower temperature. Here the material is first sintered by conventional pressure sintering or pressureless sintering until a non-communicating pore system has been obtained. In general this means that the density is greater than 95% of the theoretical value. Then the material is sintered to complete tightness under high pressure in a protective gas atmosphere, so called hot isostatic pressing.

As the technological testing has been of essential importance in the inventive work on the alloy according to the invention, the invention will in the following be explained by examples of machining tests performed with chosen compositions within the composition range. The nitride and carbide powders which were used for the preparation of the materials of the described tests, were commercial products.

Example 1

Toughness tests in intermittent cutting
Conditions: Planing of slotted bar of cast iron
Material: Cast iron SIS 0125
Insert: SNGN 120412, Primary land: 0.2 mm × 20°
Cutting data:
Cutting speed: 380 m/min
Feed: 0.30 mm/rev
Cutting depth: 1.0 mm
Life criterion: breakage

Figure 1 shows the life (y), min, of a material with 30 w/o TiN and 70 w/o $Al_2O_3$. The fraction of aluminium oxide of cubic structure (x) (vol-%) has been measured: 0, 4, 10, 17, 34, 53, 69 and 90. Furthermore a material with free AlN (1) in the micro structure has been included, totally nine variants. As a comparison material a commercial pressure sintered material with the composition 70 w/o $Al_2O_3$ and 30 w/o TiC (2), which represents the prior art technique of mixed ceramic materials, was also included. It can thereby be noticed that the two-phase oxide matrix gave an essentially better toughness performance than what earlier could be achieved with solely one-phase $\alpha$-$Al_2O_3$.

Figure 2 shows the influence of the $Al_2O_3$-concentrations (x), w/o on the life (y), min, of a material with Ti(C,N) and 15—25 vol-% "cubic $Al_2O_3$" of the total amount of $Al_2O_3$. The TiN/TiC-ratio was constantly 3/1. The presence of the cubic phase gave a very good toughness also for relatively high $Al_2O_3$-concentrations. (3) reprsents a commercial pressure-sintered composition having 70 w/o $Al_2O_3$ and 30 w/o TiC.

Example 2

Wear resistance tests in cast iron
Conditions: Turning
Material: Cast iron SIS 0125
Insert: SNGN 120412, Primary land: 0.2 mm × 20°
Cutting data:
Cutting speed: 490 m/min
Feed: 0.30 mm/rev
Cutting depth: 1.5 mm

Figure 3 shows the wear resistance, that is the flank wear (y), mm, as a function of time (x), min, of three compositions, 55 w/o $Al_2O_3$ + 45 w/o TiN, (4), 80 w/o $Al_2O_3$ + 20 w/o Ti $(N_{0.75}C_{0.25})$, (5), and 70 w/o $Al_2O_3$ + 30 w/o $Ti(N_{0.75}C_{0.25})$, (6), according to the invention compared with a commercial material with 70 w/o $Al_2O_3$ and 30 w/o TiC (7). The fraction of aluminium oxide of cubic structure was 30—50 vol-%. The excellent bonding involved that the flank wear resistance even for such a low aluminium oxide concentration as 55 w/o (4) was at least as good as the flank wear resistance of the commercial material (7). For higher aluminium oxide concentrations (5, 6) the flank wear resistance was superior to the one of the commercial material.

Example 3

Wear resistance tests in hardened and tempered steel
Material: SIS 2541
Insert: SNGN 120412, Primary land 0.2 mm × 20°
Cutting data:
Cutting speed: 270 m/min
Feed: 0.30 mm/rev
Cutting depth: 2 mm

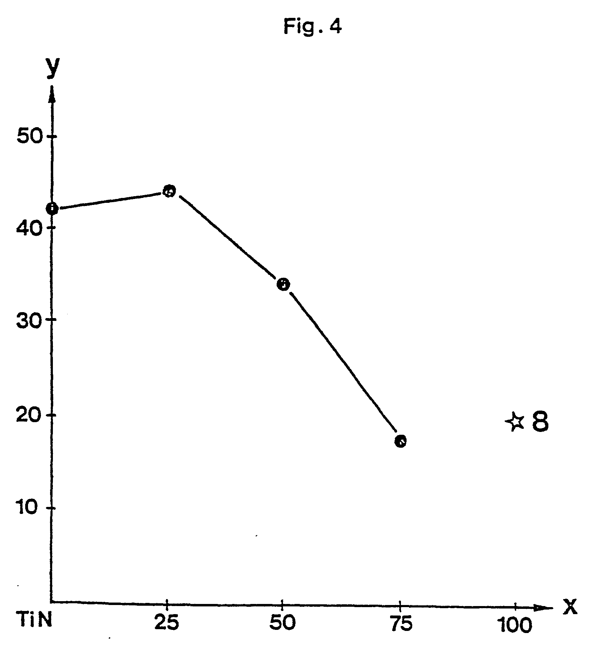

In this test the life (y), min, cf. Figure 4, was determined by the crater wear resistance and the ability to withstand a weakened geometry caused by a strong crater wear without edge destruction. In the tests materials with constant $Al_2O_3$-concentration = 70 w/o and constant TiC-TiN-concentration = 30 w/o, but with varying TiC/TiN-ratio in mole-%; 75/25, 50/50, 25/75, and 0/100 were investigated. Thus, the amount of TiC (x), mole%, was 75, 50, 25 and 0 mole%, respectively. The fraction of "cubic $Al_2O_3$" of the total fraction of $Al_2O_3$ was 25—45 vol-%. The increased life of materials according to the invention is evident from Figure 4. (8) represents a commercial mixed ceramic having the composition 70 w/o $Al_2O_3$ and 30 w/o TiC.

In the light of among other things the results which have been obtained in technological tests, it has been established that the limits of the composition of the alloy according to the invention is dependent of:

1. The aluminium oxide concentration should not be less than 50 w/o to get a satisfactory level of the flank wear resistance.
2. The carbon concentration of the nitride should not exceed 40 atom-% of the total fraction of carbon, nitrogen and oxygen to obtain a satisfactory crater wear resistance in steel cutting.
3. The fraction of "cubic $Al_2O_3$" of the total frac-

tion of aluminium oxide should be between 5 and 50 vol-% to obtain improved toughness and wear resistance.

4. The nitride or carbonitride should comprise at least 10 w/o of the composition to obtain a satisfactory toughness.
5. The magnesium oxide concentration should not exceed 1 w/o, because $MgAl_2O_4$ can appear in the micro structure over this limit, which has an injurious effect on the toughness and cutting ability. The lower limit is set by the sintering inertia of the components. Materials based on TiN-$Al_2O_3$ and TiN/TiC-$Al_2O_3$ do not need any additives to obtain optimal properties, while materials with high concentrations of zirconium and hafnium need a higher sintering temperature whereby magnesium oxide has a positive effect on the grain growth stability of the present aluminium oxide.
6. Other well known sintering promoting oxide additives such as titanium oxide, zirconium oxide, nickel oxide, chromium oxide, neodymium oxide and yttrium oxide can be added to the material without changing the characteristic properties of the material according to the invention.
7. It is known that lithium oxide can stabilize a cubic nitrogen alloyed aluminium oxide, so even lithium oxide can be used as an additive to increase the alloying effect of nitrogen.
8. Impurities which may be obtained in the grinding of the basic material with grinding bodies of cemented carbides and from mill linings of steel should not change the essential properties of the alloy according to the invention.

From the following examples 4—6 the conditions of producing ceramic inserts of the alloy according to the invention will be evident and in the examples 7—9 results of cutting tests of such inserts will be shown.

Example 4

A mixture of 75 w/o $Al_2O_3$, 5 w/o TiC, 18 w/o TiN and 2 w/o AlN was carefully mixed by grinding in alcohol.

2 w/o polyethylene/glycol was added as a lubricant. The mixture was dried, homogenized and pressed to inserts. The pressed inserts were dewaxed in vacuum and sintered to a full density for one hour at 1700°C in a protective gas atmosphere. The composition above gave 15 vol-% "cubic $Al_2O_3$" of the total fraction of $Al_2O_3$.

Example 5

A mixture of 65 w/o $Al_2O_3$ 2 w/o AlN and 33 w/o Ti(C,N) was carefully mixed by grinding in acetone. The titanium carbonitride was prepared by heating a mixture of 20 w/o TiC and 80 w/o TiN to 2150°C for 4 h. The obtained mixture was charged into a graphite tool after drying and homogenization, and was pressure sintered at 1660°C for 25 min at a pressure of 20 MPa. The composition above gave 12 vol-% "cubic $Al_2O_3$" of the total fraction of $Al_2O_3$.

Example 6

A mixture of 63.5 w/o $Al_2O_3$, 35 w/o TiN, 1 w/o AlN and 0.5 w/o MgO was carefully mixed by grinding in alcohol with an addition of 2 w/o polyethyleneglycol as a lubricant. The mixture was dried, homogenized and pressed to inserts. The pressed inserts were subjected to a heat treatment comprising dewaxing at 400°C and sintering for 1 h at 1650°C after which a closed pore system had been achieved. The sintered inserts were thereafter isostatically hot pressed to full density for 1 h at 1450°C and 150 MPa. The obtained composition gave 8 vol-% "cubic $Al_2O_3$" of the total fraction of $Al_2O_3$.

Example 7

Turning tests of inserts made according to example 4
Conditions: Precision machining of brake drum
Material: Cast iron, hardness HB 200—230
Insert: SNGN 120424, Primary land 0.05 mm × 20°
Cutting data:
Curring speed: 500 m/min
Feed: 0.21 mm/rev
Cutting depth: 0.8—1.0 mm
Wear criterion: not accepted surface
Result: life as number of work parts
Pressure sintered pure ceramic ($Al_2O_3$): 3.4
Pressure sintered mixed ceramic ($Al_2O_3$-30 w/o TiC): 5.3
Material according to the invention: 7.2

Example 8

Turning tests of inserts made according to example 5
Conditions: Rough turning of cylinder liner
Material: Cast iron, hardness HB 245—290
Insert: SNGN 120816, Primary land: 0.2 mm × 20°
Cutting data:
Cutting speed: 630 m/min
Feed: 0.55 mm/rev
Cutting depth: 2—5.5 mm
Wear criterion: Chipping of the cutting edge
Result: number of work parts per cutting edge
Pressureless sintered pure ceramic ($Al_2O_3$): 5
Pressure sintered mixing ceramic ($Al_2O_3$+30 w/o TiC): 16
Material according to the invention: 27

Example 9

Turning tests of inserts made according to example 6
Conditions: Turning of cast iron wheel
Material: Cast iron SIS 0120
Insert: SNGN 120412, Primary land 0.05 mm × 20°
Cutting data:
Cutting speed: 384 m/min
Feed: 0.4 mm/rev
Cutting depth: 0.8 mm
Wear criterion: breakage
Result: life as number of work parts

Pressure sintered mixed ceramic ($Al_2O_3$-30 w/o TiC): 52
Material according to the invention: 92

## Claims

1. Cutting insert for chipforming machining consisting of a ceramic alloy comprising 40—95 w/o of aluminium oxide and 5—60 w/o of nitrides and/or carbonitrides of one or more metals of the group IVB, VB and VIB of the periodic system and 0—2 w/o of one or more sintering promoting oxides, the total composition of said nitrides and/or carbonitrides being given by the expression

$$(M_aM'_bM''_c)(C_xN_yO_z)_v$$

where
M = Ti, Zr, Hf
M' = V, Nb, Ta
M'' = Cr, Mo, W
and
$a + b + c = 1$,
$b + c \leq 0.20$ $0.85 \leq v \leq 1.05$,
$x + y + z = 1$,
$x \leq 0{,}5$,
$z \leq 0.15$

characterized in that said alloy contains a nirogen-stabilized aluminium oxide with cubic structure, the fraction of aluminium oxide with the cubic structure comprises 2—95 vol-% of the total fraction of the aluminium oxide matrix and the rest of the aluminium oxide comprises the stable hexagonal (corundum) structure.

2. Cutting insert according to claim 1, characterized in that said sintering promoting oxide comprises magnesium oxide.

3. Cutting insert according to any of the previous claims, characterized in that said sintering promoting oxide additives comprise 0—1.5 w/o of the composition.

4. Cutting insert according to any of the previous claims, characterized in that $b + c = 0.10$.

5. Cutting insert according to any of the previous claims, characterized in that the fraction of nitrogen-stabilized aluminium oxide with cubic structure comprises 5 to 50 vol-% of the total fraction of the aluminium oxide matrix.

6. Cutting insert according to any of the previous claims, characterized in that said nitride and carbonitride comprise TiN and/or Ti(C,N).

## Patentansprüche

1. Schneideinsatz aus einer keramischen Legierung, die Aluminiumoxid und Nitride und/oder Carbonitride eines oder mehrer Metalle der Gruppen IVb, Vb und VIb des Periodensystems und ein oder mehrere die Sinterung fördernde Oxide umfaßt und in welcher das Aluminiumoxid 40 bis 95 Gewichts-% der Zusammensetzung, die Nitride und/oder die Carbonitride 5 bis 60 Gewichts-% der Zusammensetzung und die das Sintern fördernden Oxide 0 bis 2 Gewichts-% der Zusammensetzung ausmachen und die Gesamtzusammensetzung der Nitride und/oder Carbonitride durch den Ausdruck

$$(M_aM'_bM''_c)(C_xN_yO_z)_v$$

wiedergegeben wird, worin
M = Ti, Zr, Hf,
M' = V, Nb, Ta,
M'' = Cr, Mo, W
und
$a + b + c = 1$,
$b + c \leq 0.20$,
$0{,}85 \leq v \leq 1.05$,
$x + y + z = 1$,
$x \leq 0{,}5$,
$z \leq 0.15$,

dadurch gekennzeichnet, daß die Liegerung ein stickstoffhaltiges Aluminiumoxid mit kubischer Struktur enthält, der Anteil an Aluminiumoxid mit der kubischen Struktur 2 bis 95 Volumen-% des Gesamtanteils an Aluminiumoxid ausmacht und der Rest des Aluminiumoxids aus der stabilen hexagonalen Struktur (Korund) besteht.

2. Schneideinsatz nach Anspruch 1, dadurch gekennzeichnet, daß das das Sintern fördernde Oxid Magnesiumoxid umfaßt.

3. Schneideinsatz nach einem der vorausgehenden Ansprüche, dadurch gekennzeichnet, daß die das Sintern fördernden Oxidzusätze 0 bis 1,5 Gewichts-% der Zusammensetzung ausmachen.

4. Schneideinsatz nach einem der vorausgehenden Ansprüche, dadurch gekennzeichnet, daß $b + c \leq 0.10$ ist.

5. Schneideinsatz nach einem der vorausgehenden Ansprüche, dadurch gekennzeichnet, daß der Anteil an stickstoffhaltigem Aluminiumoxid mit kubischer Struktur 5 bis 50 Volumen-% des Gesamtanteils an Aluminiumoxid ausmacht.

6. Schneideinsatz nach einem der vorausgehenden Ansprüche, dadurch gekennzeichnet, daß das Nitrid und Carbonitrid aus TiN und/oder Ti(C,N) besteht.

## Revendications

1. Outil de coupe en composition céramique comprenant de l'oxyde d'aluminium et des nitrures et/ou carbonitrures d'un ou plusieurs métaux des groupes IV B, V B et VI B de la classification périodique des éléments chimiques et un ou plusieurs oxydes favorisant le frittage, dans laquelle l'oxyde d'aluminium représente 40 à 95% en poids, les nitrures et/ou carbonitrures 5 à 60% en poids, et les oxydes favorisant le frittage 0 à 2% en poids de la totalité de la composition, la composition totale des nitrures et/ou carbonitrures étant donnée par l'expression

$$(M_aM'_bM''_c)(C_xN_yO_z)_v$$

dans laquelle

M = Ti, Zr, Hf

M' = V, Nb, Ta

M'' = Cr, Mo, W

et

$a + b + c = 1$

$b + c \leq 0.2$

$0,85 \leq v \leq 1.05$

$x + y + z = 1$

$x \leq 0,5$

$z \leq 0.15$,

caractérisée en ce qu'elle renferme un oxyde d'alumine contenant de l'azote avec spinelle de structure cubique, cette fraction de structure cubique représentant 2 à 95% en volume de la totalité de la fraction oxyde d'aluminium, le reste étant constitué par de l'oxyde d'aluminium de structure hexagonale stable (corindon).

2. Outil de coupe selon la revendication 1, caractérisé en ce que l'oxyde favorisant le frittage comprend de l'oxyde de magnésium.

3. Outil de coupe selon l'une des revendications précédentes, caractérisé en ce que les additifs oxyde favorisant le frittage représentent 0 à 1,5% en poids de la composition.

4. Outil de coupe selon l'une des revendications précédentes, caractérisé en ce que $b + c \leq 0,10$.

5. Outil de coupe selon l'une des revendications précédentes, caractérisé en ce que la fraction oxyde d'aluminium contenant de l'azote, à structure cubique, représente 5 à 50% en volume de la totalité de la fraction oxyde d'aluminium.

6. Outil de coupe selon l'une des revendications précédentes, caractérisé en ce que le nitrure et carbonitrure comprend TiN et/ou Ti(C,N).

Fig. 1

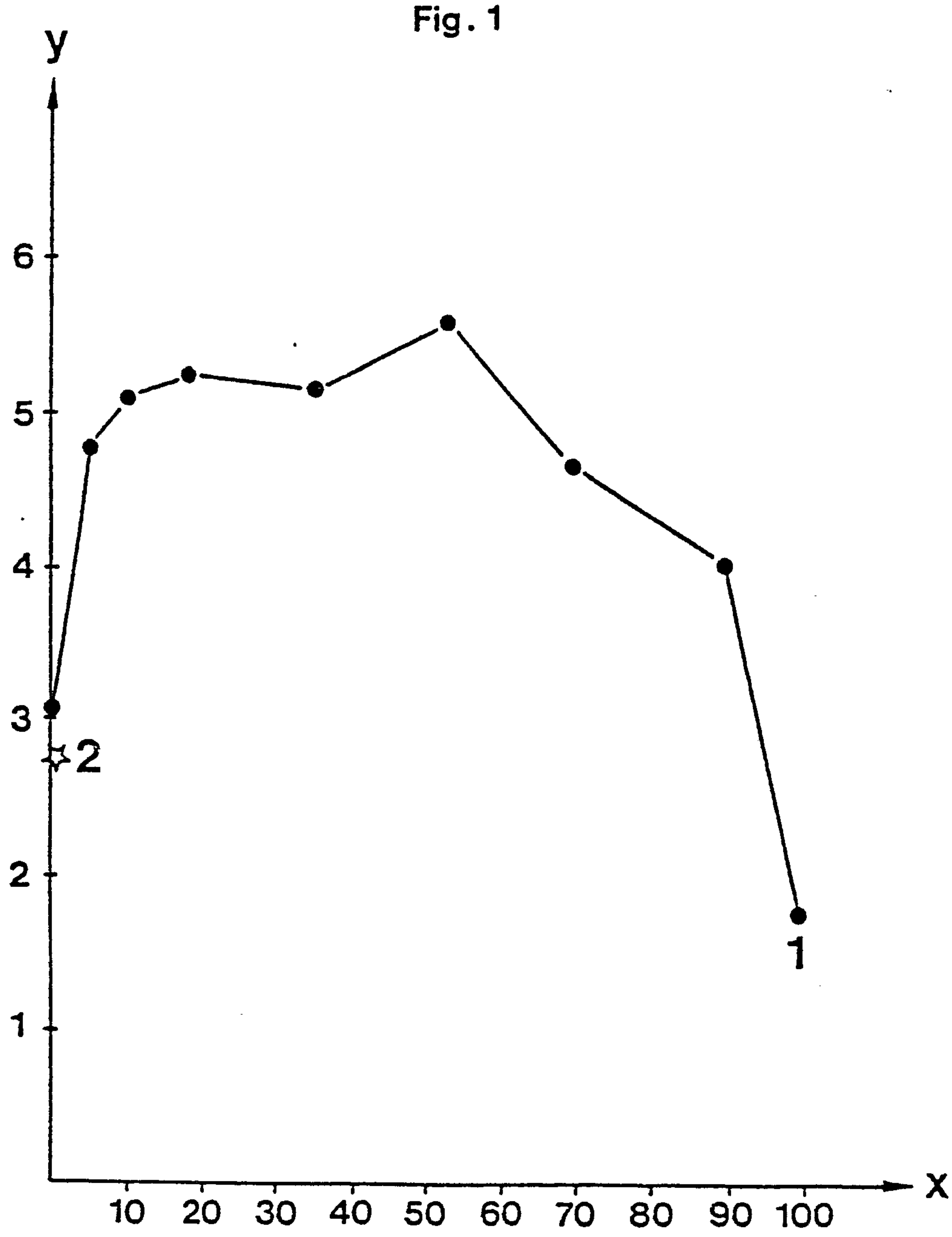

Fig. 2

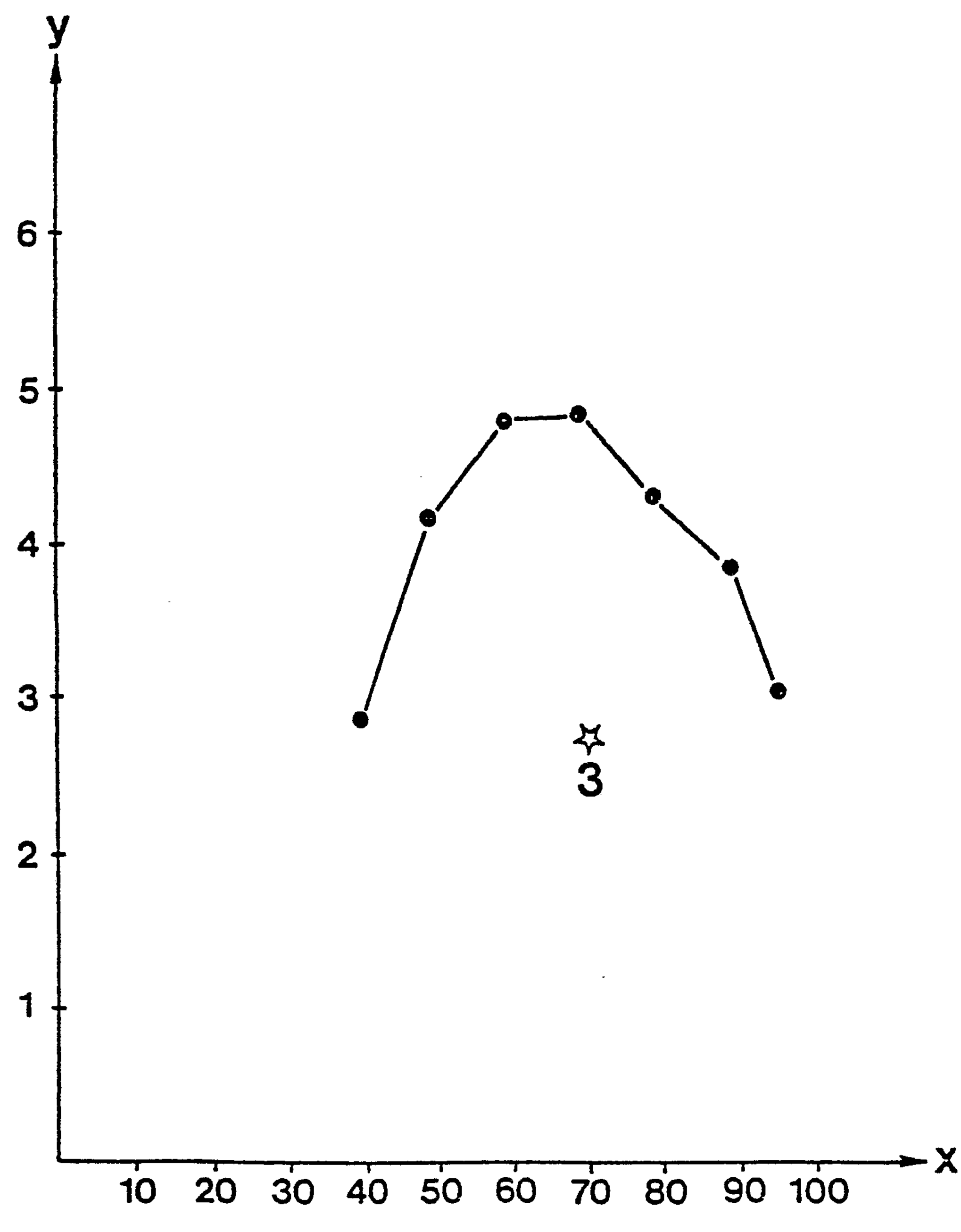

Fig. 3

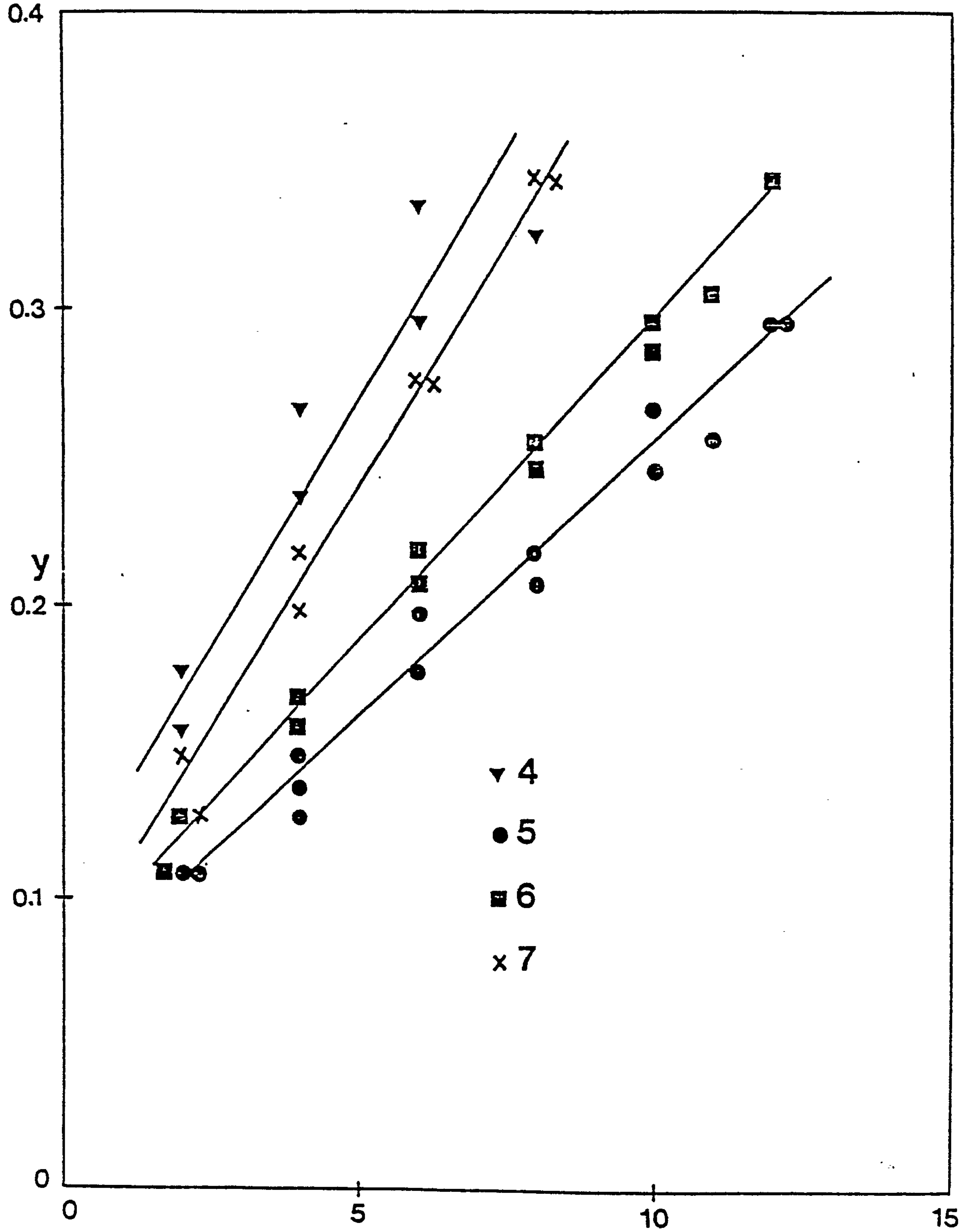

Fig. 4